# EUROPEAN PATENT SPECIFICATION

(11) **EP 0 565 183 B1**
(45) Date of publication and mention of the grant of the patent: **13.11.1996**
(21) Application number: 93200957.4
(22) Date of filing: 05.04.1993
(51) Int. Cl.: F16L 55/045

(54) **Water hammer absorber**
Wasserschlagabsorber
Amortisseur de coup de belier

(30) Priority: 06.04.1992 NL 9200636
(43) Date of publication of application: 13.10.1993
(73) Proprietor: Wormmeester, Johan Gerrit, NL-3971 SM Driebergen (NL)
(72) Inventor: Wormmeester, Johan Gerrit, NL-3971 SM Driebergen (NL)
(74) Representative: Jilderda, Anne Ayolt

(56) References cited:
- EP-A- 0 193 077
- DE-A- 3 339 876
- DE-A- 3 816 349
- GB-A- 2 139 703

## Description

The invention relates to a water hammer absorber comprising a flexible part which in use forms part of the water pipe system and which yields when the water pressure excerted thereon increases and a jacket which surrounds said flexible part, a chamber, being formed between said flexible part and said jacket and sealed air-tight characterized in that a valve, lip or clack is provided in said chamber, which is located between said chamber and the atmosphere and only opens if there is an underpressure in said chamber.

Water hammer is the phenomenon which occurs in water pipes, when a water flow running therein is suddenly stopped. The pressure in the pipe then suddenly increases and then decreases, which leads to objectionable sounds and the "hammering" of the pipes. Leaking pipe joints and damage to fittings are often the result of water hammer. Abrupt closing-off of a water flow occurs, for example, in the use of washing machines, dish washing machines and with the use of fast-closing taps.

In order to weaken the sudden increase of the water pressure in a pipe, use is made of expansion tanks, equipped with a membrane and an air cushion. Such an expansion tank consists of two chambers, separated from one another by a membrane. It is attached to the water pipe with the aid of a nipple. The water in the pipe can flow into the tank and it then fills one of the chambers. In the other chamber there is an overpressure, so that an air cushion is formed. The membrane will adopt a balanced position, determined by the water pressure on the one side and the pressure of the air in the chamber on the other side. A sudden pressure surge which occurs, followed by a sudden drop in pressure - i.e., water hammer-is then absorbed by the membrane and the air cushion situated behind it.

The said known expansion tanks have several disadvantages when in use. The most important disadvantage is that they are not located "in" the pipe. That means that the shock in the pipe only partially proceeds to the absorber, but also proceeds directly through the pipe - and this part is therefore not absorbed.

An improvement is achieved by giving the pipe a sharp bend at the place where the absorber is coupled to the pipe. In this manner a larger part of the water hammer can be led to the absorber; but the disadvantage mentioned above is still present. A further disadvantage of the known absorbers is that in time the overpressure behind the membrane - i.e., the air cushion - disappears. The effectiveness of the absorber therefore decreases.

A water hammer absorber known from European patent application no. 193.077 solves a number of these problems in that it comprises a tubular flexible part which is connected in-line with the piping system and is capable of absorbing a pressure peak in the system. This known absorber moreover does not comprise a pressurized air cushion which may degrade and therefore is less prone to maintenance in that respect. The absence of a pressurized air-cushion however on the other hand imposes limits to the maximum pressure which the device is capable to absorb.

It is an object of the present invention to provide for a water hammer absorber which may be connected in-line with the piping system and which comprises an air cushion for improved absorbing capabilities in which any eventual degradation of said air cushion is counteracted.

To this end a water hammer absorber of the type described in the opening paragraph is according to the invention characterized in that the chamber between said flexible part and said jacket is sealed at least substantially air-tight and is provided with means which only open if there is an under-pressure in said chamber formed between said flexible part and said jacket.

When water hammer occurs, the flexible pipe part will be able to absorb the shock and the jacket around the outer wall of that part of the pipe ensures that the expansion thereof is restricted. The absorption is therefore carried out by the elasticity of the wall of the flexible part. The degree to which that occurs is dependent on the inside diameter of the part, for example a flexible hose, and the thickness of its wall. Expansion of a flexible part of the pipe will only take place when the pressure has reached a certain value. Furthermore, when expansion takes place, the more that expansion increases an increasingly smaller pressure increase will be necessary for a further expansion. The purpose of the jacket is to restrict that expansion and it therefore acts as a support. Furthermore, it acts against the occurrence of changes in length and it facilitates the connection of the (hose) part to the pipes.

The chamber between the jacket and the outer wall of the flexible part is closed in an airtight manner and contains air under an overpressure. This air cushion will ensure an extra absorption, so that the absorber can be used up to higher pressures. Due to the construction said air cushion is constantly self-restoring and accordingly does not require any additional maintenance.

Because, as stated, for a certain diameter the wall thickness is decisive for the pressure above which, and the degree to which, expansion occurs, a water hammer absorber according to the invention is constructed in such a manner that the wall thickness and the inside diameter of the flexible part, such as the hose, are adjusted for the pressure increase which occurs in the pipe. It is also possible to adjust the elasticity of the flexible part in other manners, such as with the aid of "ribs" on the hose, etc.

Instead of a single wall thickness, or a single inside diameter, a variable wall thickness and a variable inside diameter can be used, whereby in that case various parts of the flexible part work in the case of different pressures. That wall thickness and/or inside diameter may, for example increase or decrease continuously in one direction.

A preferred embodiment of an absorber according to the invention has a hose wall which runs conically: for each pressure level there is a wall part which functions as an absorber. In the case of higher pressures, a part of the hose wall will be supported against the jacket; in the case of lower pressures a part of the hose will maintain its original - unchanged - shape.

A drawback which is connected to absorbers of the type described in the opening paragraph is, that if the flexible part were to tear, a leak would occur. Also this drawback is removed by the absorber according to the invention, as a result of the fact that the chamber between the flexible part and the jacket is equipped with a valve, lip or clack, which only opens if there is an under-pressure in the chamber between the outer wall of the flexible part and the jacket, and on the other hand contributes to an air-tight closure of said chamber.

Water hammer absorbers according to the invention can, of course, have various sizes. When in use absorbers may be connected in parallel.

A useful use of the absorbers according to the invention is in the case of hot water apparatus. As a result of the heating of the water therein the pressure increases, unless the water is tapped-off. Such apparatus are therefore equipped with safety provisions, but these have the disadvantage that they lead to loss of water. Use of an absorber according to the invention provides a solution.

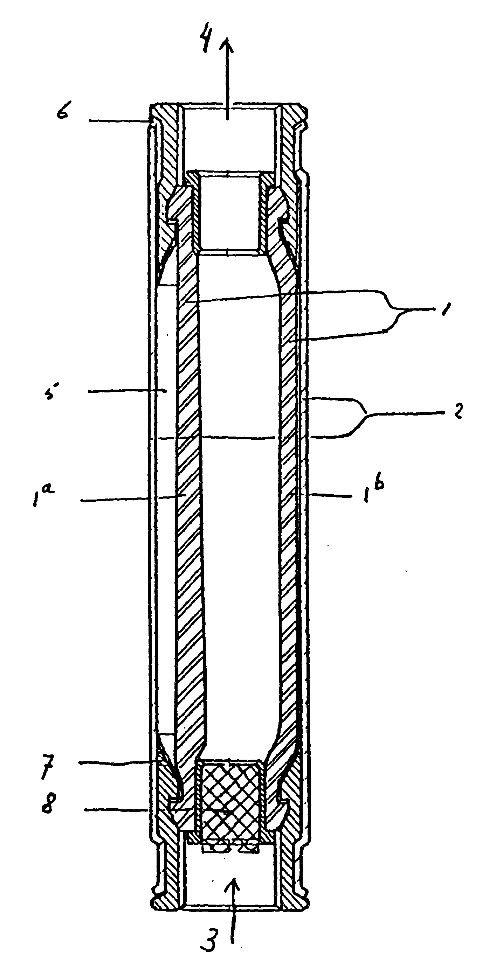

The invention will be explained with the aid of the drawing, in which a cross-section through an absorber according to the invention is schematically shown.

In the drawn cross-section of an embodiment of the absorber, 1 is a flexible hose and 2 is the jacket which is constructed around the hose. The water flows into the hose 1 according to the arrow 3 and flows out again according to the arrow 4.

The drawing shows how the hose 1 is positioned "at rest" with regard to the jacket 2: see situation 1a. There is then a chamber 5 between the hose 1 and the jacket 2. This has an open connection to the outside atmosphere via opening 6.

The chamber 5 may also be closed-off from the outer atmosphere and there may be an overpressure therein. 7 shows a lip which, in the event of overpressure occurring in the chamber 5, closes, and opens in the case of an under-pressure.

From a certain pressure increase in the hose 1 this will expand, until it comes up against the inner side of the jacket 2. That situation is shown by 1b.

If the thickness of the hose wall and the inner diameter of the hose in the direction of the flow 3 is/are conical, as can clearly be seen in the drawing at wall part la, in the case of an increasing pressure the part with the thinnest wall and with the largest inner diameter will start to expand first and will be pressed against the jacket 2, followed as the pressure increases by the increasingly thick wall parts, or respectively the wall parts at the place where the inner diameter is smaller, until finally the situation according to 1b has been reached: the situation which corresponds with maximum pressure.

8 shows a one way valve - which is not necessary but which is generally present - which has been built into the pipe.

## Claims

1. Water hammer absorber comprising a flexible part (1) which in use forms part of the water pipe system and which yields when the water pressure excerted thereon increases and a jacket (2) which surrounds said flexible part (1), a chamber (5), being formed between said flexible part (1) and said jacket (2) and sealed air-tight, characterized in that a valve, lip or clack is provided in said chamber, which is located between said chamber and the atmosphere and only opens if there is an underpressure in said chamber (5).

2. Water hammer absorber according to claim I characterized in that said flexible part (1) features a tubular shape and in that said jacket is provided co-axially with said tubular flexible part.

3. Water hammer absorber according to claim 2 characterized in that said tubular flexible part has a varying wall thickness and/or inner diameter over its longitudinal direction.

4. Water hammer absorber according to claim 3 characterized in that the flexible part (1) features a continuously increasing wall thickness and/or inner diameter.

## Patentansprüche

1. Wasserschlagabsorber, der aus einem flexiblen Teil (1) besteht, das in der Anwendung ein Teil des Wasserleitungssystems bildet und das nachgibt, wenn der darin ausgeübte Wasserdruck ansteigt, und einem Mantel (2), der das besagte flexible Teil (1) umgibt, wobei eine Kammer (5) zwischen dem besagten flexiblen Teil (1) und dem besagten Mantel (2) gebildet wird und luftdicht abgeschlossen wird, dadurch gekennzeichnet, daß ein Ventil, eine Dichtlippe oder eine Ventilklappe in besagter Kammer anwesend ist, die sich zwischen besagter Kammer und der äußeren Umgebung befindet und nur dann öffnet, wenn ein Unterdruck in besagter Kammer (5) herrscht.

2. Wasserschlagabsorber nach Anspruch 1 dadurch gekennzeichnet, daß das besagte flexible Teil (1) eine röhrenförmige Gestalt hat, und darin, daß der besagte Mantel in bezug auf das besagte röhrenförmige flexible Teil koaxial angeordnet ist.

3. Wasserschlagabsorber nach Anspruch 2 dadurch gekennzeichnet, daß das besagte röhrenförmige flexible Teil in seiner Längsrichtung eine(n) unterschiedliche(n) Wandstärke und/oder Innendurchmesser hat.

4. Wasserschlagabsorber nach Anspruch 3 dadurch gekennzeichnet, daß das besagte röhrenförmige flexible Teil (1) eine(n) kontinuierlich zunehmende(n) Wandstärke und/oder Innendurchmesser hat.

## Revendications

1. Un absorbant de marteau à eau comprenant une partie flexible (1) qui, lors de l'utilisation, constitue une partie du système de canalisation d'eau et qui débite lorsque la presion d'eau exercée dessus s'accroît, et une enveloppe (2) qui entoure cette partie flexible (1), une cavité (5) étant formée entre cette partie flexible (1) et cette enveloppe (2) et scellée hermétiquement, caractérisé en ce que cette cavité est équipée d'une valve, d'un bec ou d'un clapet, qui se trouve entre cette cavité et l'atmosphère et ne s'ouvre que s'il y a une dépression dans cette cavité (5).

2. Un absorbant de marteau à eau d'après la revendication 1, caractérisé en ce que cette partie flexible (1) revêt une forme tubulaire et en ce que cette enveloppe est munie coaxialement de cette partie tubulaire flexible.

3. Un absorbant de marteau à eau d'après la revendication 2, caractérisé en ce que cette partie tubulaire flexible comporte une épaisseur de paroi et/ou un diamètre interne qui varient dans sa direction longitudinale.

4. Un absorbant de marteau à eau d'après la revendication 3, caractérisé en ce que cette partie flexible (1) est dôtée d'une épaisseur de paroi et/ou d'un diamètre interne qui s'accroissent de façon continue.
